Europäisches Patentamt

European Patent Office

Office européen des brevets

(11) Publication number: **0 341 225**
**A2**

# (12) EUROPEAN PATENT APPLICATION

(21) Application number: **89850096.2**

(22) Date of filing: **23.03.89**

(51) Int. Cl.⁴: **B 62 B 3/06**

(30) Priority: **02.05.88 SE 8801645**

(43) Date of publication of application:
**08.11.89 Bulletin 89/45**

(84) Designated Contracting States: **DE FR GB IT**

(71) Applicant: **SKF Nova AB**
**S-415 50 Göteborg (SE)**

(72) Inventor: **Adolfsson, Rune**
**Skyttegatan 4**
**S-502 43 Boras (SE)**

(74) Representative: **Forsberg, Lars-Ake et al**
**SKF NOVA AB Patent Department**
**S-415 50 Göteborg (SE)**

(54) Device for use in vehicles.

(57) A wheeled vehicle (10) is provided with a member (19), which can be brought to engagement with the base for lateral displacement of the vehicle (10). The member (19) is pivotably arranged between an inactive position and an active position, whereby the member (19) in its active position in engagement with the base is inclined relative thereto.

Fig 3

EP 0 341 225 A2

## Description

The present invention relates to a device for use in vehicles, such as cars and pallets carts, comprising a member, which can be brought into engagement with a base supporting the vehicle for sideward displacement of the vehicle, said member being pivotably connected to the vehicle between an inactive position out of engagement with the base and an active position in engagement with the base.

At wheeled vehicles it is often a desire to be able to steer the vehicle in confined spaces, e.g. when squeezing the car in between other cars and when steering pallet carts in narrow spaces. In commonly occuring designs the vehicle is wheeled to and fro at varying wheel deflections of steerable pairs of wheels, which makes it rather difficult and time wasting to reach correct position. It also has been suggested to equip the vehicle with particular driving means for displacement of the vehicle in its lateral direction. Due to its complexity and for cost reasons, these designs however have been utilized to a limited extent only.

The present invention intends to provide a simple and rather inexpensive lateral drive for wheeled vehicles, which drive can be used in a plurality of applications.

The invention hereinafter is described with reference to the accompanying drawings, in which is shown an embodiment of the invention in exemplifying purpose. This is merely intended to illustrate the invention, which can be modified within the scope of the appended claims.

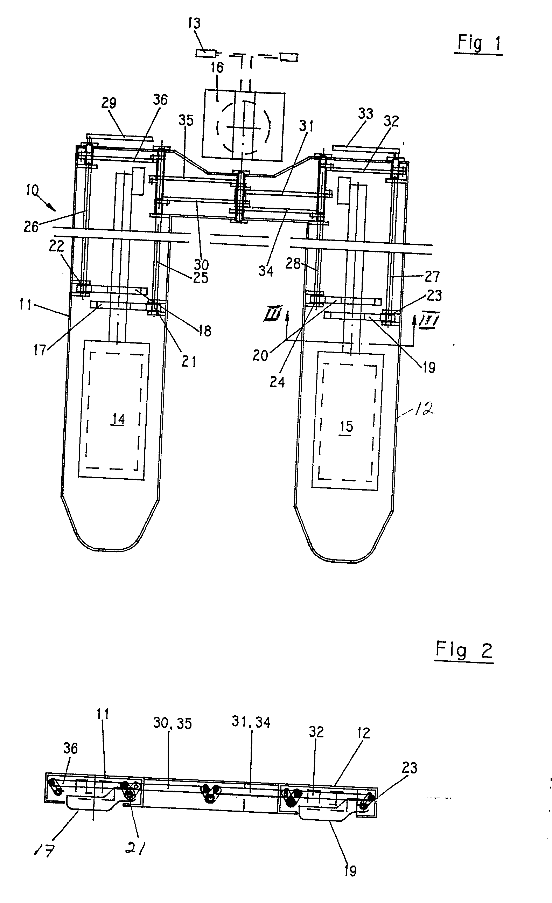

Fig. 1 of the drawings shows a view from below of an embodiment of a device according to the invention.

Fig. 2 shows an end view of the embodiment according to Fig. 1.

Fig. 3 and 4 show a section along line III-III in Fig. 1 with the lateral displacement member in active and inactive positions resp.

The pallet cart, which in the drawings is generally designated 10, is intended to transport pallets in a known manner. The pallet cart 10 incorporates two lifting forks 11, 12, which in a manner known per se are vertically adjustable by means of a handle connected to the pallet cart and schematically indicated at 13. The pallet cart 10 further incorporates two wheels 14, 15 provided at the front ends of the lifting forks 11, 12 and a pair of wheels 16 provided between the lifting forks at the rear end thereof and being steerable by means of the handle 13. At the front end of the lifting forks, supporting legs 17-20 are pivotably arranged about pivot axles 21-24. The supporting legs 17-20 are connected to longitudinal rods 25-28 in such a manner that turning of a rod results in a pivoting of the corresponding supporting leg.

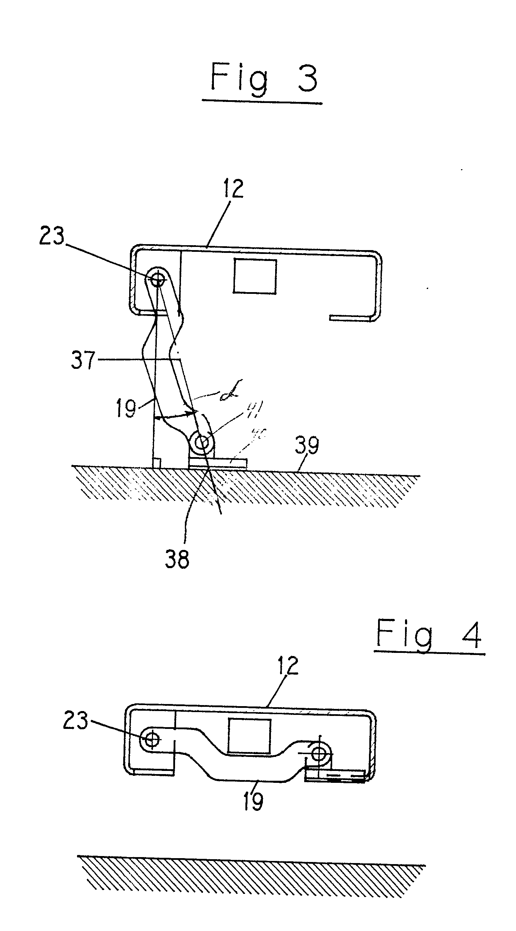

At transport of a pallet on the pallet cart 10 the lifting forks 11, 12 are in an elevated position and the supporting legs 17-20 in their inactive position shown in Fig. 4.

If, at steering of the cart 10 to a desired position, its front end, i.e. the end provided with wheels 14, 15, will not reach its exact position, then either the supporting legs 17,19 or 18,20 are lowered to their active position shown in Fig. 3 due to in which direction a position correction is desired.

The pivoting of the supporting legs 17, 19 is effected by means of a foot-operated pedal 33 connected to the rod 27. The rotation of the rod 27 effected by the pedal 33 via slewing brackets 30, 31, 32 is transferred into a corresponding rotation of the rod 25. In a corresponding manner a pedal 29 is connected to the rod 26, whereby a turning of the rod 26 effected by an actuation of the pedal 29 is transferred into a corresponding rotation of rod 28 via slewing brackets 34, 35, 36.

According to the invention the cart 10 is designed in such a manner, that, when the supporting leg 19 is in its active position, a connecting line 37 between the contact point 38 against the base 39 and the pivot axis 23 forms an acute angle $\alpha$ with the perpendicular to the base. In the embodiment shown a supporting foot 40 is pivotally supported about an axle 41 on the supporting leg 19, whereby the connecting line is defined as a straight line through the axles 23, 41. An acute angle with the perpendicular, however is obtained for all lines through the axle 23 and a point on the supporting foot 40.

When the supporting legs 17,19 have been extended to their active positions the ends of the supporting legs are situated a short distance above the base 39. The lifting forks 11, 12 thereupon are lowered. As they reach the base 39 a continued lowering of the lifting forks, due to friction between the supporting legs and the base, will cause a displacement of the front end of the pallet cart 10 in lateral direction during simultaneous pivoting of the supporting legs 17, 19 in a direction towards its inactive position. During this lateral displacement of the cart 10, the wheels 14, 15 will slide against the base 39.

Due to the fact that the pair of wheels 16 is steerable by means of the handle 13 the rearmost end of the cart could normally be easily positioned in the correct position. If required it of course is possible to provide supporting legs also at the rear end of the cart.

The arrangement described above fundamentally may be used at all types of vertically adjustable vehicles. It may for instance be used at cars having vertically adjustable gas-hydraulic suspension under one or both wheel pairs. The supporting legs thereby preferaly are pivotable beyond the perpendicular to the base for making possible a side displacement of the car in both directions.

## Claims

1. A device for use in vehicles, such as cars and pallet carts, comprising a member(19), which can be brought into engagement with a base supporting the vehicle (10) for sideward displacement of the vehicle (10), said member (19) being pivotably connected to the vehicle (10) between an inactive position out of engagement with the base and an active position in engagement with the base,

**characterized in that**

said member (19) is arranged on a vertically adjustable part (12) of the vehicle (10) and adapted to be pivoted to its active position when said vehicle part (12) is in an elevated position, whereby the member (19) is adapted, at lowering the vehicle part (12) first to be brought into contact with the base (39) and at continued lowering of the vehicle part (12) to cause sideward displacement of at least a portion of the vehicle (10) under simultaneous pivoting of the member (19) towards its inactive position.

2. A drive according to claim 1, wherein said member (19) in its active position is arranged in such a manner, that a connecting line (37) between a contact point (38) against the base (39) and the pivot axis (23) forms an acute angle (a) with the normal to the base (39).

3. A device according to claim 2, wherein the vehicle is a pallet cart (10) and said vertically adjustable vehicle part is two lifting forks (11, 12),

**characterized in that**

pivotable members (17, 19) are provided on each lifting fork (11, 12), and that the pivotable members (17, 19) are interconnected in such a manner that actuation of one of the members (17) for pivoting thereof to its active position causes simultaneous actuation of the other member (19).

4. A device according to any of the preceeding claims, wherein said member is pivotable beyond the normal to the base for making possible of sideward displacement of the vehicle in both directions.

Fig 1

Fig 2

Fig 3

Fig 4